# EUROPEAN PATENT SPECIFICATION

(11) **EP 4 342 833 B1**
(45) Date of publication and mention of the grant of the patent: **24.12.2025**
(21) Application number: 22827293.6
(22) Date of filing: 24.05.2022
(51) Int. Cl.: B65H 75/36, G02B 6/44, H04Q 1/06, H04Q 1/14, B65G 47/82, H01R 13/72

(54) **JUMPER STORAGE APPARATUS**
ÜBERBRÜCKUNGSSPEICHERVORRICHTUNG
APPAREIL DE STOCKAGE DE CAVALIER

(30) Priority: 26.06.2021 CN 202110714813
(43) Date of publication of application: 27.03.2024
(73) Proprietor: Huawei Technologies Co., Ltd., Longgang Shenzhen, Guangdong 518129 (CN)
(72) Inventor: JIANG, Yongshuo, Shenzhen, Guangdong 518129 (CN); WEN, Yida, Shenzhen, Guangdong 518129 (CN); HU, Jian, Shenzhen, Guangdong 518129 (CN)
(74) Representative: Pfenning, Meinig & Partner mbB
(86) International application number: PCT/CN2022/094630
(87) International publication number: WO 2022/267796

(56) References cited:
- EP-B1- 3 026 474
- WO-A1-2017/055947
- CN-A- 113 526 263
- CN-A- 113 534 373
- CN-A- 113 534 374
- CN-A- 113 534 376
- CN-A- 113 534 377
- CN-B- 105 142 040
- CN-B- 105 445 868
- CN-U- 205 450 346
- CN-U- 210 175 941
- CN-U- 210 864 130
- CN-Y- 200 998 075
- US-A1- 2001 032 860
- US-A1- 2013 161 067
- US-A1- 2018 231 723
- US-A1- 2020 146 168
- US-B1- 6 353 696

## Description

### TECHNICAL FIELD

This application relates to the field of communication technologies, and in particular, to a jumper storage apparatus.

### BACKGROUND

CN 105 445 868 B describes a high-density fiber distribution module and optical communication wire distribution equipment. The module comprises a housing, and the top of the housing is provided with a cover plate. The cover plate and the housing form a cavity with a front opening. The front opening of the cavity is provided with a baffle plate, and the baffle plate is provided with a first through hole which is used for storing a plurality of parallel adapters. The baffle plate is provided with a second through hole at one end of the first through hole, wherein the second through hole is communicated with the first through hole. The baffle plate is provided with a limiting sliding block at the second through hole, and the limiting sliding block can move in a length direction of the baffle plate in the second through hole. When the limiting sliding block moves in a direction departing from the first through hole in the second through hole, the space of the second through hole is released, so as to carry out the manual insertion and pulling of the adapters.

US 2018/231723 A1 describes an electronic device with a moveable optical connector.

With the popularization of fiber to the x (Fiber To The X, FTTX), optical fiber resources are applied increasingly intensively. In scenarios such as a data center (data center), an upstream optical distribution frame (Optical Distribution Frame, ODF) of an optical distribution network (Optical Distribution Network, ODN), and a street cabinet, there is a huge demand for optical fiber scheduling and port-level optical cross-connections. In addition to occupying more space, a fiber adjustment operation that a worker of an optical network operator needs to perform is increasingly heavy.

Therefore, it is necessary to study a jumper storage apparatus that is convenient for use by an optical distribution device.

### SUMMARY

The invention provides a jumper storage apparatus according to claim 1 that can store a jumper and is convenient for use by a plugging device at any time.

According to a first aspect, this application provides a jumper storage apparatus. The jumper storage apparatus is applied to an optical distribution device, especially an automated optical distribution device. The jumper storage apparatus is configured to store a jumper, the jumper includes a cable and two connectors connected to two ends of the cable, the cable is an optical fiber, the connectors are optical fiber connectors, and the jumper storage apparatus is divided into a first region and a second region, where the second region and the first region are adjacent to each other and have internal spaces in communication with each other, the connectors of the jumper are located in the first region, the cable of the jumper is located in the second region, and the internal spaces of the first region and the second region provide a movement space for the jumper. However, generally, positions of each jumper in the first region and the second region are fixed, and the jumper starts to move in the first region and the second region only when the jumper is fetched by a plugging device, until the jumper is fetched from the jumper storage apparatus. A jumper fetching window and a first elastic mechanism are arranged in the first region, the jumper fetching window is configured to accommodate one of the connectors, and the jumper fetching window is a position in which a plugging apparatus fetches the jumper from the jumper storage apparatus; and the first elastic mechanism is located between all the connectors in the first region and a bottom surface of a housing of the jumper storage apparatus, and elastically abuts between the housing of the jumper storage apparatus and the connectors. Because the jumper is standby for the optical distribution device, the jumper stored in the jumper storage apparatus may also be referred to as a standby jumper.

Further, the jumper storage apparatus comprises the housing, a cover plate, and an external interface assembly, the housing and the cover plate are in snap-fit with each other and form the first region and the second region, and the external interface assembly is connected between the housing and the cover plate and forms the jumper fetching window; wherein the external interface assembly comprises a first body, a second body, a second elastic mechanism, and a sliding block, both the first body and the second body are connected to the housing, an enclosing space is arranged in the first body, the sliding block is elastically connected to the first body in the enclosing space by using the second elastic mechanism, an opening of the enclosing space faces the second body, the jumper fetching window and a standby window are formed between the second body and the first body, the sliding block is slidable between the jumper fetching window and inside of the enclosing space in a first direction, the standby window is located between the jumper fetching window and the enclosing space in the first direction, the connectors are linearly arranged in the first region in a second direction, the standby window directly faces the connectors in the first region in the second direction, and the second direction is perpendicular to the first direction; and wherein the second body further comprises a limiting structure, and the limiting structure is configured to prevent a dustproof cap from being fetched in a process in which the plugging apparatus fetches a connector at the jumper fetching window; or the external interface assembly and the housing are an integrated structure; and wherein the external interface assembly comprises a limiting structure, and the limiting structure is configured to prevent a dustproof cap from being fetched in a process in which the plugging apparatus fetches a connector at the jumper fetching window.

Based on the jumper storage apparatus of the foregoing structure, the jumper storage apparatus may store a corresponding quantity of jumpers or store a fixed quantity of jumpers based on a service requirement. When the standby jumper needs to be inserted into a port on a distribution panel of the optical distribution device based on a service requirement, the plugging apparatus may fetch the connector from the jumper fetching window of the jumper storage apparatus, and further pull out the entire standby jumper. After the jumpers of the jumper storage apparatus are used up, new jumpers may be further placed in corresponding positions in the first region and the second region in sequence, so that the plugging apparatus can use the jumpers at any time.

In a possible implementation, the jumper storage apparatus has only one first region, and therefore, there is also only one corresponding jumper fetching window, and two connectors of a same jumper are arranged adjacently in the first region. Because the two connectors of the same jumper are arranged adjacently, the plugging apparatus may fetch the connectors of the same jumper in sequence, so as to fetch the entire jumper.

In a possible implementation, the jumper storage apparatus has two first regions, each of the first regions has one jumper fetching window, the second region is located between the two first regions, and two connectors of a same jumper are respectively located in different first regions. Because there are two first regions, the number of jumpers stored in the first regions of the same length may be doubled. In this way, the jumper storage apparatus of the same size may store more jumpers.

In a possible implementation, when the jumper storage apparatus has two first regions, there are a plurality of jumpers, and the two connectors of the same jumper are arranged in a same sequence in each of the first regions. The plugging apparatus may fetch two connectors of the same jumper from different first regions in the same sequence. In this way, jumpers can be smoothly fetched one by one, and no trouble such as entangling between the jumpers occurs.

The jumper storage apparatus includes the housing, a cover plate, and an external interface assembly, the housing and the cover plate are in snap-fit with each other and form the first region and the second region, and the external interface assembly is connected between the housing and the cover plate and forms the jumper fetching window.

In a possible implementation, the first elastic mechanism includes a spring and a lock block, one end of the spring is fastened to the housing of the jumper storage apparatus, the other end of the spring is fastened to the lock block, and when the first region stores at least one connector, the lock block abuts against a connector closest to the first elastic mechanism. Since the lock block has a larger surface area than that of the spring, the lock block can support a connector more easily, thereby ensuring that a connector in a storage channel is stable.

In a possible implementation, the first region stores no connector, two ends of the first elastic mechanism abut between the housing of the jumper storage apparatus and the external interface assembly or are in a natural state.

In a possible implementation, the second region further includes a clamping mechanism, a cable organization space is formed between the clamping mechanism and the housing, the cable of the jumper is sequentially accommodated in the cable organization space, a cable outlet is formed between the clamping mechanism and the housing, and the cable outlet connects the cable organization space to an external space of the jumper storage apparatus; and a sequence of a cable of a jumper in the cable organization space is the same as a sequence of connectors of a same jumper in the first region. The sequence of the cables of the same jumper in the cable organization space is the same as the sequence of the connectors of the same jumper in the first region. Therefore, the plugging apparatus may fetch jumpers one by one, and no trouble such as entangling between different jumpers occurs.

The external interface assembly includes a first body, a second body, a second elastic mechanism, and a sliding block, both the first body and the second body are connected to the housing, an enclosing space is arranged in the first body, the sliding block is elastically connected to the first body in the enclosing space by using the second elastic mechanism, an opening of the enclosing space faces the second body, the jumper fetching window and a standby window are formed between the second body and the first body, the sliding block is slidable between the jumper fetching window and inside of the enclosing space in a first direction, the standby window is located between the jumper fetching window and the enclosing space in the first direction, the connectors are linearly arranged in the first region in a second direction, the standby window directly faces the connectors in the first region in the second direction, and the second direction is perpendicular to the first direction.

According to a second aspect, an example, which is not an embodiment of the present invention but helpful for understanding certain aspects thereof, further provides a jumper storage apparatus. The jumper storage apparatus is configured to store a jumper, the jumper includes a cable and two connectors connected to two ends of the cable, and the jumper storage apparatus includes a first region and a second region, where the second region and the first region are adjacent to each other and have internal spaces in communication with each other, the connectors of the jumper are located in the first region, the cable of the jumper is located in the second region, at least one adapter is arranged in the first region, the adapter is configured to accommodate a plug of one of the connectors, and the adapter is a position in which a plugging apparatus fetches the jumper from the jumper storage apparatus. The jumper storage apparatus has a simple structure and is easier to store jumpers.

In a possible implementation, there are two first regions, the second region is located between the two first regions, the jumper storage apparatus further includes a plurality of distinguishing rods, and the distinguishing rods are at least partially located in the second region and are configured to organize the cable of the jumper.

### BRIEF DESCRIPTION OF DRAWINGS

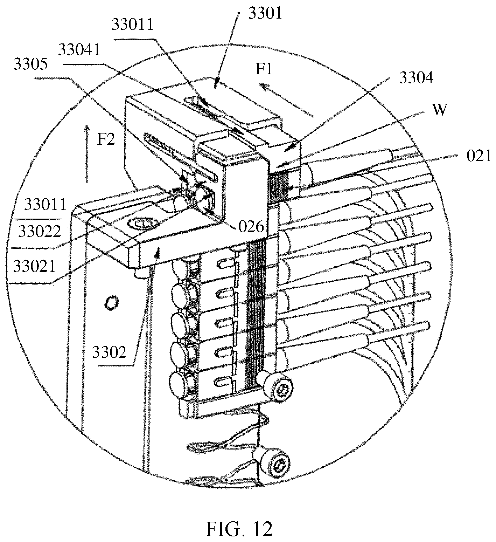

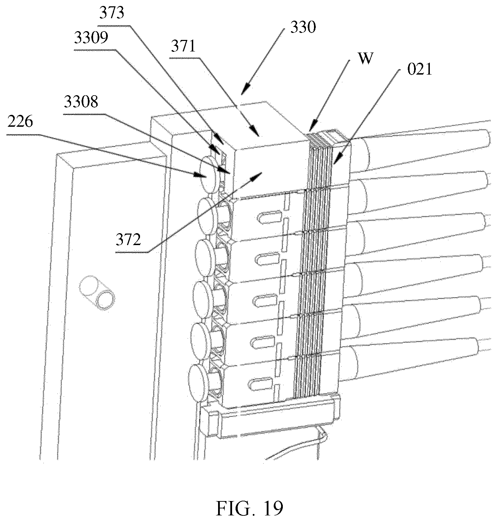

To describe the technical solutions in embodiments of the present invention or in the background more clearly, the following describes the accompanying drawings used for embodiments of the present invention or the background. Only the diagrams shown in the following figures 12 and 19 are according to the present invention.
FIG. 1 is a schematic diagram of an architecture of a passive optical fiber network, where an optical distribution device provided in this application may be applied to the passive optical network;
FIG. 2A is a schematic diagram of an intelligent cable network management system, where an optical distribution device provided in this application may be applied to the management system;
FIG. 2B schematically shows an interaction manner between stations in the management system shown in FIG. 2A by using three stations as an example;
FIG. 3 is a schematic diagram of a framework of an optical distribution device according to an implementation of this application;
FIG. 4 is a schematic diagram of a distribution region in an optical distribution device according to an implementation of this application;
FIG. 5 is a schematic diagram of a distribution region in an optical distribution device according to another implementation of this application;
FIG. 6 is a schematic diagram of a jumper storage apparatus according to an implementation of this application;
FIG. 7 is a schematic diagram of local enlargement of a jumper fetching window in a jumper storage apparatus according to an implementation of this application;
FIG. 8 is a schematic diagram of a jumper storage apparatus with a cover plate removed according to an implementation of this application;
FIG. 9 is a schematic diagram of a jumper storage apparatus according to another implementation of this application;
FIG. 10 is a schematic diagram of a jumper storage apparatus with a cover plate removed according to another implementation of this application;
FIG. 11 is a local exploded view of an external interface assembly in a jumper storage apparatus according to another implementation of this application;
FIG. 12 is a schematic diagram of local enlargement in a direction in a case that an external interface assembly in a jumper storage apparatus is subject to no force according to another implementation of this application;
FIG. 13 is a schematic diagram of local enlargement in another direction in a case that an external interface assembly in a jumper storage apparatus is subject to no force according to another implementation of this application;
FIG. 14 is a schematic diagram of a case that a connector is not fetched when an external interface assembly in a jumper storage apparatus is subject to force according to another implementation of this application;
FIG. 15 is a schematic diagram of a case that a connector is fetched when an external interface assembly in a jumper storage apparatus is subject to force according to another implementation of this application;
FIG. 16 is a schematic diagram of a case that a connector is pushed into a standby space when an external interface assembly in a jumper storage apparatus is subject to force according to another implementation of this application;
FIG. 17 is a schematic diagram of a jumper storage apparatus according to still another implementation of this application;
FIG. 18 is a schematic diagram of a jumper storage apparatus according to still another implementation of this application;
FIG. 19 is a schematic diagram of local enlargement of a jumper fetching window in a jumper storage apparatus according to still another implementation of this application; and
FIG. 20 is a schematic diagram of a jumper storage apparatus according to still another implementation of this application.

### DESCRIPTION OF EMBODIMENTS

The following describes embodiments of the present invention with reference to accompanying drawings in embodiments of the present invention.

An optical distribution device in this application is applied to an optical network technology. The optical network technology refers to a network structure technology that uses optical fiber transmission. The optical network technology is not merely a simple optical fiber transmission link, but implements, based on a large-capacity, long-distance, and high-reliability transmission medium provided by an optical fiber, interconnection and flexible scheduling of a multi-node network by using optical and electronic control technologies. An optical network generally refers to a wide area network, a metropolitan area network, or a newly built wide-range local area network that uses an optical fiber as a main transmission medium.

An optical network or an optical fiber scheduling system provided in an implementation of this application is an ODN (Optical Distribution Network, optical distribution network). The ODN is an FTTH (Fiber-To-The-Home, fiber-to-the-home) cable network based on a PON (Passive Optical Network, passive optical network) device, and plays a role in providing an optical transmission channel between an OLT (Optical Line Terminal, optical line terminal) and an ONU (Optical Network Unit, optical network unit). Based on functions, from a central office side to a user side, the ODN may be divided into four parts: a feeder cable subsystem, a distribution cable subsystem, a drop cable subsystem, and a fiber terminal subsystem.

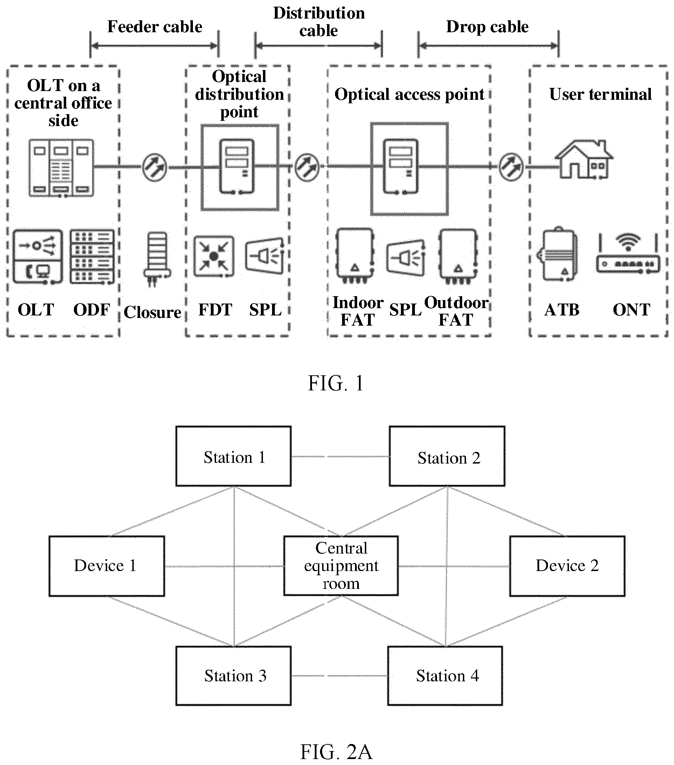

FIG. 1 shows an architecture of an ODN. Referring to FIG. 1, an OLT on a central office side is a feeder cable subsystem, an optical distribution point is a distribution cable subsystem, an optical access point is a drop cable subsystem, and a user terminal is a fiber terminal subsystem. An optical path is implemented between the OLT on the central office side and the optical distribution point by using a feeder cable, an optical path is implemented between the optical distribution point and the optical access point by using a distribution cable, and an optical path is implemented between the optical access point and the user terminal by using a drop cable. Specifically, the feeder cable from an ODF of the OLT on the central office side (also referred to as an equipment room on the central office side) to the optical distribution point is used as a main cable to implement long-distance coverage; the distribution cable from the optical distribution point to the optical access point is configured to distribute optical fibers to the nearest user region along the feeder cable; and the drop cable from the optical access point to the user terminal implements fiber-to-the-home. In FIG. 1, Closure is a cable closure, FDT is an optical cross connection cabinet (that is, fiber distribution terminal, Fiber Distribution Terminal), SPL is a splitter (splitter), FAT is a fiber access terminal, ATB is an access terminal box, and ONT is an optical network terminal. The optical distribution device provided in this application may be the ODF arranged in the OLT on the central office side in the optical network shown in FIG. 1, or may be the FDT.

Specifically, the ODF is a distribution connection device between an optical network (for example, a local area network) and an optical communication device or between different optical communication devices. The ODF is configured to terminate and distribute a main cable on a central office side in an optical fiber communication system, and can facilitate connection, distribution, and scheduling of optical fiber lines. With the increasing degree of network integration, an optical-digital hybrid distribution frame that integrates an ODF, a DDF (Digital Distribution Frame, digital distribution frame), and a power distribution unit emerges, and is applicable to small-sized and medium-sized distribution systems of fiber to the neighborhood, fiber to the building, remote modules, and wireless base stations.

Another specific application scenario of the optical fiber scheduling system provided in this application is applied to an enterprise networking scenario, as shown in FIG. 2A. An intelligent cable network management system includes a central equipment room (which may be understood as a master station management system) deployed in a communication network management system, a plurality of stations (which may be understood as substation interaction systems distributed on network nodes at various levels), and a device (for example, a fiber remote switching device). The central equipment room is a core of an enterprise cable network management system. The central equipment room performs optical communication with each station by using a communication interface module. In a specific implementation, an operation platform, a master station server, and several communication interface modules may be arranged in the central equipment room. FIG. 2A schematically shows four stations, that is, a station 1, a station 2, a station 3, and a station 4. In an actual network deployment process, based on a specific situation, more stations may be included, or only one or two stations may be arranged. Each station may be considered as a substation interaction system, and an architecture of the substation interaction system may be similar to an architecture of the central equipment room. FIG. 2A schematically shows two devices, that is, a device 1 and a device 2. In an actual network deployment process, a quantity of devices may be adjusted based on a specific situation.

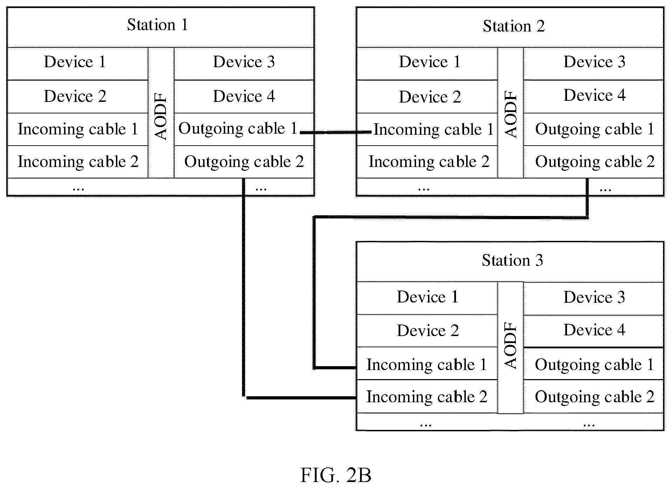

As shown in FIG. 2A, there may be optical communication interaction between the central equipment room and each station, between the central equipment room and each device, between stations, and between each station and each device. FIG. 2B schematically shows an interaction manner between stations by using three stations as an example. Referring to FIG. 2B, each of the stations (a station 1, a station 2, and a station 3) includes a device 1, a device 2, a device 3, a device 4, an incoming cable 1, an incoming cable 2, an outgoing cable 1, an outgoing cable 2, and an AODF. The outgoing cable 1 of the station 1 is connected to the incoming cable 1 of the station 2, the outgoing cable 2 of the station 1 is connected to the incoming cable 2 of the station 3, and the outgoing cable 2 of the station 2 is connected to the incoming cable 1 of the station 3. In this way, optical communication between any two stations is implemented.

The AODF in each station in FIG. 2B may be an optical distribution device provided in this application. The optical distribution device provided in this application may be arranged in the central equipment room or each station. An input port and an output port on a distribution panel of the optical distribution device are used to implement optical communication service interaction between stations, between devices, or between a station and a device. In a data center, an optical distribution device may implement interconnection between different devices on a same floor. When service interconnection is required between devices on different floors, a device may be connected to an optical distribution device on a current floor, and then an optical distribution device on the current floor is connected to an optical distribution device on another floor by using an inter-floor cable. That is to say, optical communication connection between the optical distribution device provided in this application and another optical distribution device may be implemented by using a cable.

In an implementation, the optical distribution device provided in this application may implement automatic fiber adjustment, is also referred to as an automatic optical distribution frame (Automatic Optical Distribution Frame, AODF), and may be applied to any scenario in which optical fiber scheduling is required. In addition to the optical network systems shown in FIG. 1 and FIG. 2A, an application scenario of the optical distribution device may be a data center (data center), a street cabinet, or another pan-fixed network application scenario. For example, the optical distribution device provided in this application may be used in layout of a network such as an access network, a transmission network, or a wireless fronthaul or backhaul network.

In another implementation, the optical distribution device provided in this application may alternatively be an ODF or another fiber management device.

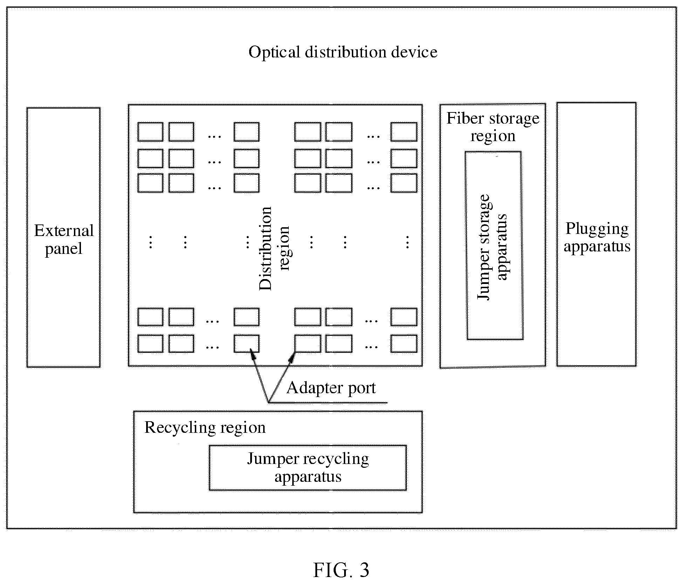

Referring to FIG. 3, an optical distribution device provided in this application includes a distribution region, a plugging apparatus, a storage region, and/or a recycling region. The optical distribution device provided in this application includes three architectures. In a first architecture, the optical distribution device includes a distribution region, a plugging apparatus, a storage region, and a recycling region. In a second architecture, the optical distribution device includes a distribution region, a plugging apparatus, and a storage region, but does not include a recycling region. In a third architecture, the optical distribution device includes a distribution region, a plugging apparatus, and a recycling region, but does not include a storage region.

The distribution region includes a first port and a second port, and an optical path is implemented by inserting connectors at two ends of a connection jumper into the first port and the second port respectively. Each of the first port and the second port is an adapter port into which a connector of the jumper is inserted. Specifically, there are a plurality of first ports and a plurality of second ports. The plurality of first ports may be connected to different devices or different networks, and similarly the plurality of second ports may also be connected to different devices or different networks. For example, one first port is configured to connect to a device 1, and one second port is configured to connect to a device 2. In this application, the first port and the second port are connected by using the connection jumper, to implement an optical path between the device 1 and the device 2.

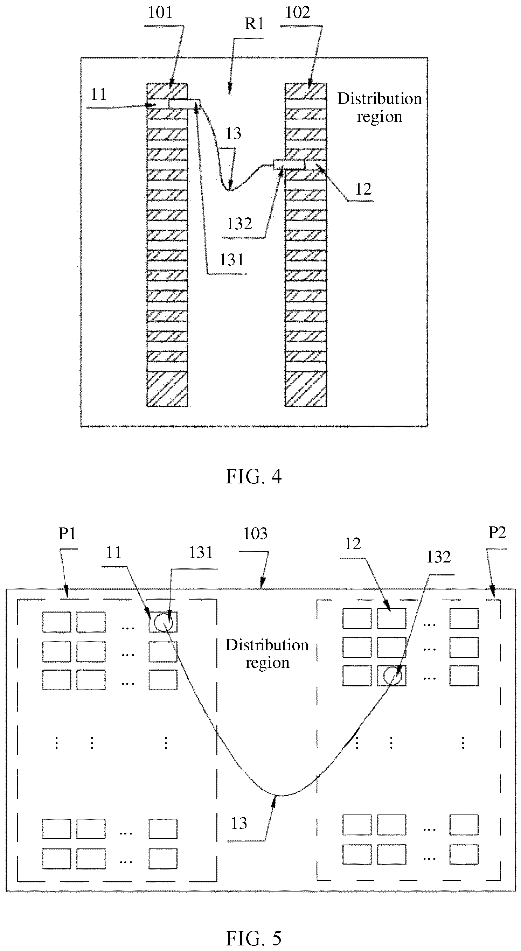

In an implementation, referring to FIG. 4, a first distribution panel 101 and a second distribution panel 102 are arranged in a distribution region. FIG. 4 shows a sectional view of the first distribution panel 101 and the second distribution panel 102, where parts that are on the first distribution panel 101 and the second distribution panel 102 and that are not covered by section lines are considered as the first port 11 and the second port 12. A line accommodation space R1 is formed between the first distribution panel 101 and the second distribution panel 102 that are spaced opposite to each other, the plurality of first ports 11 are arranged on the first distribution panel 101, the plurality of second ports 12 are arranged on the second distribution panel 102, the first port 11 faces the second port 12, a connector 131 (also referred to as a plug) at one end of a connection jumper 13 is inserted into one first port 11, and a connector (also referred to as a plug) 132 at the other end is inserted into one second port 12. A cable 133 of the connection jumper 13 is located in the cable accommodation space.

Specifically, the connection jumper 13 includes the two connectors 131, 132 and the cable 133 connected between the two connectors. In an implementation, the connection jumper 13 has both a function of optical transmission and a function of current transmission. In an implementation, the connector 131 may be an optical fiber connector. In another implementation, the connector 131 may alternatively be a photoelectric connector. Correspondingly, the cable is an optical fiber, or the cable may include both an optical fiber and a wire. For the connector 131 in the connection jumper provided in this application, an optical fiber connector is used. Based on different transmission media, connectors may be classified into common single-mode and multimode connectors of a silicon-based optical fiber, and another optical fiber connector that uses plastic as a transmission medium. Based on connector structure forms, connectors may be classified into various forms such as FC, SC, ST, LC, D4, DIN, MU, and MT. In addition to the plug structures in the foregoing various forms, the connectors of the connection jumper and the standby jumper provided in this application may be connectors of a miniaturized customized bullet type.

In an implementation, the connection jumper provided in this application is a connection optical jumper, which is also referred to as an optical fiber jumper. An optical fiber jumper product is widely applied to fields such as a communication equipment room, fiber to the home, a local area network, an optical fiber sensor, an optical fiber communication system, an optical fiber connection transmission device, and national defense. The optical fiber jumper is also applicable to a cable television network, a telecommunication network, a computer optical fiber network, and an optical test device.

In another implementation, referring to FIG. 5, an integrated distribution panel 103 (a solid-line rectangular frame in FIG. 5 represents the integrated distribution panel) is arranged in a distribution region, and first ports 11 and second ports 12 are distributed on the integrated distribution panel 103. It may be understood that a plurality of ports are arranged on the integrated distribution panel, some of the ports are the first ports, and some of the ports are the second ports. In another implementation, two distribution panels P1 and P2 that face a same direction may be arranged in the distribution region (rectangular frames represented by two dashed lines in FIG. 5 represent the two distribution panels P1 and P2). The first ports 11 are arranged on one distribution panel P1, and the second ports 12 are arranged on the other distribution panel P2.

The storage region is configured to arrange a jumper storage apparatus, where the jumper storage apparatus is configured to store a plurality of standby jumpers, and the standby jumper includes one cable and two connectors (plugs matching adapter ports), where the two connectors are respectively connected to two ends of the cable. The standby jumper has the same structure as that of the connection jumper. When being connected to the distribution panel, the standby jumper becomes a connection jumper. In an implementation, the standby jumper may be an optical jumper, whose connectors are optical fiber connectors. There may be one or more jumper storage apparatuses, and there may be a plurality of standby jumpers in the jumper storage apparatus. The number of standby jumpers may be determined based on a requirement of a specific application scenario of the optical distribution device. When frequent service update or switching is required, a large number of standby jumpers may be configured, or the number of jumper storage apparatuses may be increased. When frequent service update or switching is not required, the number of standby jumpers in the jumper storage apparatus may be small, and even only one standby jumper is stored in the jumper storage apparatus. Specifically, in an implementation, all the standby jumpers are of a same model and a same size, and all the standby jumpers are set to be of an equal length. In another implementation, a length difference between different standby jumpers may be within a specific preset range, that is, a concept of "equal length" of the standby jumpers may be understood as that sizes of all the standby jumpers are within a preset range.

The recycling region is configured to arrange a jumper recycling apparatus, where the jumper recycling apparatus is configured to recycle a discarded jumper, and a specific meaning of "discarded jumper" refers to a replaced jumper in an optical path of a service. In an implementation, after being transported to a recycling box, the discarded jumper may include only one connector connected to one end of the cable, and the other connector is cut off in a process of recycling the jumper, so as to facilitate recycling of the cable of the discarded jumper. For example, when the connectors of the connection jumper are of a common SC plug structure, the connection jumper becomes a discarded jumper after being fetched from the distribution panel. To ensure smoothness of a jumper recycling process, and avoid a case that connectors at ends of the cable of the discarded jumper are entangled with or interfere with other connection jumpers to affect jumper recycling in the jumper recycling process, it is necessary to cut off one connector of the discarded jumper. In another implementation, the discarded jumper may include a cable and two connectors connected to two ends of the cable respectively. The two connectors are of a small-sized model, for example, customized bullet connectors or small-sized connectors. A housing of the connector is designed with a sleek or sharp head. In the jumper recycling process, the housing of the connector and the connection jumper are not entangled or do not interfere with each other. This discarded jumper without any connector being cut off can be recycled and reused.

In a possible implementation, the jumper storage apparatus is directly mounted inside the optical distribution device, and the jumper storage apparatus is detachably connected to a frame body (or a housing, or a frame) of the optical distribution device, so as to facilitate replacement. In this implementation, the storage region is a region in which the jumper storage apparatus is mounted. In another implementation, the storage region in the optical distribution device provided in this application may be a window (accessible opening) for the optical distribution device to receive a standby jumper. The optical distribution device does not include any jumper storage apparatus, and a jumper storage apparatus is an apparatus independently arranged outside the optical distribution device. The jumper storage apparatus may be transported (or loaded) to the storage region of the optical distribution device through an external device, that is, the jumper storage apparatus may be introduced in an external manner.

In a possible implementation, the jumper recycling apparatus is directly mounted inside the optical distribution device, and the jumper recycling apparatus is fixedly connected to a frame body (or a housing, or a frame) of the optical distribution device. In this implementation, the recycling region is a region in which the jumper recycling apparatus is mounted. In another implementation, the storage region in the optical distribution device provided in this application may be a window (accessible opening) for the optical distribution device to receive a standby jumper. The optical distribution device does not include any jumper recycling apparatus, and a jumper recycling apparatus is an apparatus independently arranged outside the optical distribution device. The jumper recycling apparatus may be transported (or loaded) to the recycling region of the optical distribution device through an external device, that is, the jumper recycling apparatus may be introduced in an external manner.

The plugging apparatus may be understood as an automatic transmission and execution apparatus provided with a clamping jaw (or a mechanical arm, or a robotic arm). The plugging apparatus can move between the distribution region and the storage region, and/or between the distribution region and the recycling region. The plugging apparatus can perform a plug action in the distribution region, perform a fiber fetching action in the storage region (that is, fetch a standby jumper from the jumper storage apparatus), and perform a discarded jumper recycling action in the recycling region. The plugging apparatus is capable of fetching the standby jumper from the jumper storage apparatus, inserting connectors at two ends of the standby jumper into the corresponding first port and second port respectively to implement an optical path; and/or pulling out connectors at two ends of the connection jumper from the corresponding first port and second port respectively, where the removed connection jumper is the discarded jumper, and the plugging apparatus is configured to transport the discarded jumper to the jumper recycling apparatus.

A conventional optical distribution device includes two distribution panels (or two distribution regions on one panel), where one distribution panel (or distribution region) is configured to arrange connectors (plugs for inserting an optical fiber adapter), and each connector is connected to an optical fiber (also referred to as a pigtail). It may be understood that the distribution panel is configured to connect to a large number of optical fibers, and these optical fibers are reused optical fibers, that is, an optical fiber needs to be repeatedly used to satisfy different service requirements. When an optical fiber needs to be used to connect an optical path, the optical fiber needs to be pulled out from a distribution panel by a mechanical arm, transported to the other distribution panel, and inserted into an adapter port of the other distribution panel. When an optical path needs to be disconnected, a corresponding optical fiber needs to be retrieved, that is, a connector of the optical fiber needs to be removed from an adapter port and returned to an initial position. In this architecture, the optical distribution device needs a large space to store the optical fiber. As a result, not only costs are high, but also the volume is large. In addition, each optical fiber needs to be managed in an orderly manner, and is in a straightened state in a storage space, and the optical fiber is in a stretched state for a long time. In a process of inserting and receiving a cable, pulling an optical fiber back and forth may cause a decrease in the service life of the optical fiber, and may pose a risk such as signal interrupt or signal poorness to an optical communication service.

The optical distribution device provided in this application is a consumable distribution device. A standby jumper is fetched from a jumper storage apparatus by using a plugging module. The standby jumper is used as a disposable consumable material. The plugging module connects the standby jumper between a first port and a second port to implement an optical path of a corresponding service port. Because the standby jumper is a disposable consumable material, before being connected between the first port and the second port, the standby jumper is stored in the jumper storage apparatus, and is in a naturally placed collection state. After being connected between the first port and the second port, the standby jumper becomes a connection jumper, and the connection jumper is in a non-tightened state, that is, a cable of the connection jumper is not subject to any pulling force, for example, the connection jumper is not pulled by a structure such as a coil spring for a long time. Such a design can ensure mechanical and optical performance of the connection jumper, and help ensure quality of each optical path (specifically, ensure signal transmission performance and reduce an insertion loss). Because mechanical and optical performance of the standby jumper is ensured, a risk of signal interrupt or signal poorness caused by a fiber quality problem is not likely to occur in a communication service. Therefore, this application helps reduce a risk in an optical communication service. Because of being an independent module, the jumper storage apparatus may be mounted in the optical distribution device in a detachable assembly manner. A user may configure the jumper storage apparatus based on a demand (based on a demand for standby jumpers). When the demand is small, the number of standby jumpers may be small. After the standby jumpers in the jumper storage apparatus are used up, the jumper storage apparatus may be supplemented with standby jumpers or may be replaced, it is unnecessary to store a large quantity of standby jumpers in the jumper storage apparatus, and the jumper storage apparatus may be designed to be miniaturized, which not only can miniaturize the optical distribution device, but also can reduce the costs of the optical distribution device.

As shown in FIG. 3, the optical distribution device further includes an external panel. The external panel is configured to provide an external port. It may be understood that several external ports are arranged on the external panel, where the external ports may include an input port and an output port, and an external port is configured to connect a terminal device and an external network. Specifically, a cable is connected between the terminal device and the external port, and between the external network and the external port. In this way, the optical distribution device can implement optical communication between different terminal devices or stations, or implement optical communication between a terminal device and the external network. Specifically, the external panel may be arranged in the distribution region, and the external ports on the external panel and the first ports (or the second ports) in the distribution region may be integrated on one panel. The external panel may alternatively be outside the distribution region, and may guide a signal at the first port or the second port to an external port on the external panel by using a cable.

This application provides a jumper storage apparatus, which may be arranged in an optical distribution device, or may be arranged independently of the optical distribution device. Embodiments of this application relate to jumper storage apparatuses of a plurality of structures. Regardless of a structure, a jumper storage apparatus may be divided into two regions, which are specifically: a first region and a second region. The first region provides connector storage and provides a connector fetching window, and the second region provides organization and storage of a cable of a standby jumper. There may be one or two first regions. If there are two first regions, the second region and the first region are adjacent to each other and have internal spaces in communication with each other, and the second region is located between the two first regions. If there is only one first region, the first region is located on one side surface of the jumper storage apparatus, and the second region is a region other than the first region.

The following further describes jumper-related content. A jumper includes one cable and two connectors, where the two connectors are respectively located at two ends of the cable, and a rear retainer may be further arranged at a joint between the cable and the connector. The cable may be an optical cable, and then the connector is an optical fiber connector. The cable may be a photoelectric hybrid cable, and then the connector is a photoelectric hybrid connector. Although the shape of the connector plug in the accompanying drawings is square, the shape of the connector plug in embodiments of the present invention is not limited, for example, a connector with a circular plug, a connector with a square plug, or a connector with a quasi-circular plug. Based on a difference between application scenarios, different types of jumpers can be applied to different application scenarios.

The jumper storage apparatus provided in this application is configured to store a jumper. The plugging apparatus may fetch the jumper stored in the jumper storage apparatus and insert the jumper into the optical distribution device based on a requirement. The jumper may be considered as a standby jumper of the optical distribution device. Therefore, in each implementation of the present invention, the jumper may also be referred to as a standby jumper. There may be only one or more standby jumpers. Connectors at two ends of the standby jumper are accommodated in the first region and arranged in a linear array in an extension direction of the first region, and a cable connected between the connectors at the two ends of the standby jumper are accommodated in the second region. Specifically, if the jumper storage apparatus has two first regions, connectors at two ends of a same standby jumper are respectively located in different first regions, and an arrangement sequence of the two connectors in each first region is the same, where the arrangement sequence may be a sequence starting from a connector in the jumper fetching window to a connector closest to the first elastic mechanism. For example, N standby jumpers are arranged in the jumper storage apparatus, N connectors are arranged in a row in sequence in each first region (which may be understood as linear array arrangement), and two connectors of a standby jumper that is first fetched are both in a leading position in each first region (a first position, that is, a position of a jumper fetching window in the first region). In this way, the two connectors of the standby jumper are fetched by the plugging apparatus in the same sequence. If the jumper storage apparatus has only one first region, two connectors of a same jumper need to be stored in adjacent positions in the first region. For example, N standby jumpers are arranged in the jumper storage apparatus, 2N connectors are arranged in a row in sequence in the first region, and two connectors of a standby jumper that is first fetched are arranged in a first position (leading position) and a second position in the first region. In this way, the two connectors of the same jumper may be fetched by the plugging apparatus successively based on an arrangement sequence. A jumper storage apparatus including two first regions may be referred to as a double-side jumper storage apparatus, and a jumper storage apparatus including only one first region may be referred to as a single-side jumper storage apparatus. The arrangement sequence of the cable stored in the second region is the same as the arrangement sequence of the connectors in the first region. In the single-side jumper storage apparatus, a cable of each standby jumper may be arranged in a U shape in the second region.

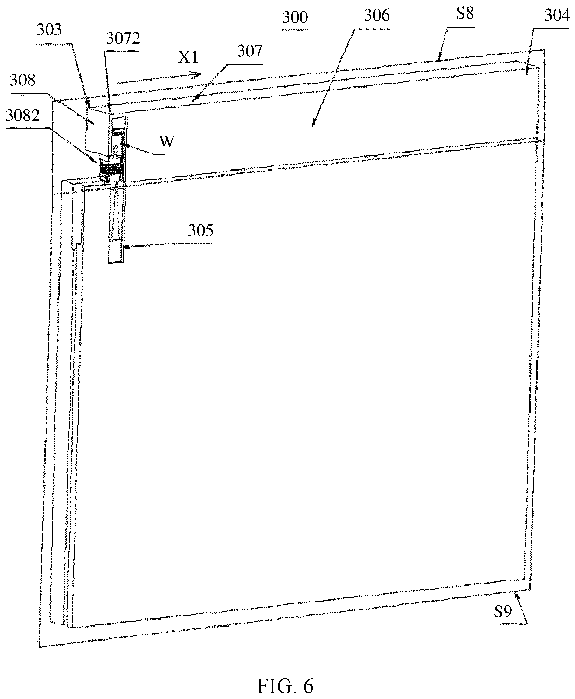

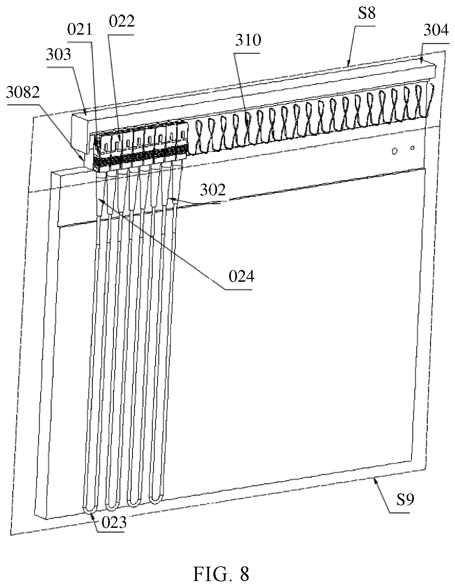

An embodiment of the present invention provides a jumper storage apparatus. For ease of description, a structure in which the jumper storage apparatus 300 includes only one first region is first described. As shown in FIG. 6, a long-strip-shaped dashed box on the top of the jumper storage apparatus 300 represents a first region S8, and a large quadrilateral dashed box below the first region S8 represents a second region S9. Specifically, the first region S8 is in a long strip shape and extends in a first direction X1, the second region S9 and the first region S8 are adjacent to each other and have internal spaces in communication with each other. The following describes specific components of the jumper storage apparatus in detail. Referring to FIG. 6 to FIG. 8, the jumper storage apparatus 300 is configured to accommodate a plurality of standby jumpers 302. Each standby jumper 302 includes connectors 021 and 022 located at two ends and a cable 023 connected between the two connectors 021 and 022. A rear retainer 024 is arranged at a joint between the cable 023 and the connector 021. As shown in FIG. 6 and FIG. 8, the first region S8 includes, in the extension direction of the first region, a first end 303 and a second end 304 that are arranged opposite to each other, a jumper fetching window W is arranged in the first region S8, and the jumper fetching window W connects the internal space of the first region S8 to the outside. The jumper fetching window W is located at the first end 303. The second region S9 is provided with a cable fetching opening 305 that connects the internal space of the second region to the outside, and the cable fetching opening 305 communicates with the jumper fetching window W. The first region S8 includes two strip-shaped first baffle plates 306 spaced opposite to each other, and a space between the two first baffle plates 306 is configured to accommodate the connectors 021 and 022 of the standby jumper 302. The first region S8 further includes a top plate 307 and a side plate 308 that are connected between the tops of the two first baffle plates 306 and that are in a long strip shape. The top plate 307 includes an edge part 3072 extending to the outside of the first baffle plate 306, and the side plate 308 is connected to an edge part 3072 of the top plate 307, a notch 3082 is arranged between the side plate 308 and the second region S9, and one end of the side plate 308, one end of the edge part 3072, and one end of the first baffle plate 306 jointly define the jumper fetching window W.

Referring to FIG. 8, the connectors 021 and 022 at the two ends of the standby jumper 302 are both accommodated in the first region S8 and arranged in a linear array in the first direction X1. In the first region S8, the connectors 021 and 022 at the two ends of the same standby jumper 302 are adjacently arranged. A first elastic mechanism 310 is further arranged in the first region S8. For example, the first elastic mechanism 310 may be a spring. The first elastic mechanism 310 is in an internal accommodation space of the first region S8, and is elastically connected between the connector 022 and the second end 304 of the first region S8. The first elastic mechanism 310 holds all connectors 021 and 022, so that the connector 021 or 022 in the position of the first end 303 is in the position of the jumper fetching window W, and after the connector 021 or 022 in the position of the jumper fetching window W is fetched, the first elastic mechanism 310 pushes a next connector 022 or 021 to the position of the jumper fetching window W. The cable 023 connected between the connectors 021 and 022 at the two ends of the standby jumper 302 is accommodated in the second region S9. Specifically, the cable 023 of each standby jumper is arranged in the second region S9 in a U shape.

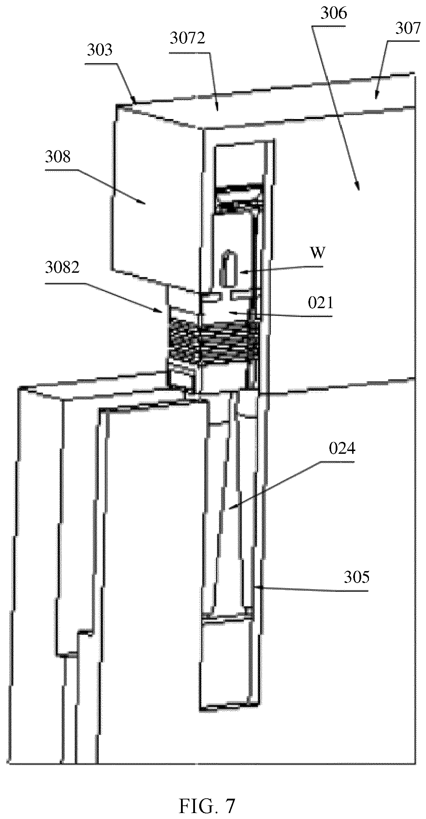

Referring to FIG. 7, the jumper fetching window W accommodates one of the connectors 021, and the jumper fetching window W is a position in which a plugging apparatus 200 fetches the standby jumper 302 from the jumper storage apparatus 300. The plugging apparatus 200 can access the jumper fetching window W from a position of the notch 3082, and after clamping the connector 021, move out of the jumper storage apparatus 300 from the jumper fetching window W in a direction perpendicular to the first baffle plate 306. In this process, the rear retainer 024, which is connected to the connector 201 and in the second region S9, of the standby jumper 302 moves out of the jumper storage apparatus 300 from the cable fetching opening 305 of the second region S9.

In summary, the jumper storage apparatus forms a storage channel in the first region, and the storage channel is defined jointly by the first baffle plates 306, the top plate 307, and the side plate 308. For example, one first baffle plate 306 is a flat plate structure, the other first baffle plate 306 includes a flat plate structure and a side that protrudes from an edge position of the flat plate structure, and the side and the flat-plate first baffle plate are in snap-fit to jointly define an internal space. The internal space includes the first region S8 and the second region S9. The first baffle plates 306, the top plate 307, and the side plate 308 form the housing of the jumper storage apparatus, and an outer surface of the housing is a surface presented by the jumper storage apparatus to the outside. To improve aesthetics and recognition of the outer surface of the housing, different images or texts may be arranged on the outer surface of the housing. The outer surface of the housing may alternatively be set to a planar shape, and the outer surface of the housing may alternatively be set to an uneven shape.

Referring to FIG. 8, the first elastic mechanism 310 may further include a spring and a lock block. One end of the spring is fixedly connected to the second end 304, the other end of the spring is fixedly connected to the lock block, and the lock block abuts against the connector in the storage channel. Specifically, the lock block directly abuts against a connector that is in the storage channel and that is closest to the first elastic mechanism 310. Since the lock block has a larger surface area than that of the spring, the lock block can support a connector more easily, thereby ensuring that a connector in a storage channel is stable. When there is no connector in the storage channel and the jumper fetching window W, the first elastic mechanism 310 abuts against the position of the first end 303 or is in a natural state. In this case, the first elastic mechanism 310 is longest in the storage channel. When a plurality of connectors are arranged in the storage channel, the plurality of connectors are successively arranged with one abutting against another. When the connector in the jumper fetching window W is fetched by the plugging apparatus, the connector located in the storage channel moves under an elastic force of the first elastic mechanism 310 until the connector closest to the jumper fetching window W is pushed into the jumper fetching window W, to fill the space of the jumper fetching window W.

In embodiments shown in FIG. 6 to FIG. 8, a structure (including the edge part 3072 of the top plate 307, the side plate 308, the jumper fetching window W, the notch 3082, and the cable fetching opening 305) at the first end 303 forms an external interface assembly. In the implementation shown in FIG. 6, the external interface assembly and the housing of the jumper storage apparatus are an integrated structure, and do not have a movable connecting piece (for example, a sliding block). The external interface assembly of the jumper storage apparatus provided in this application includes a cavity that can accommodate a connector of a standby jumper. The cavity is the jumper fetching window W, and the jumper fetching window W connects the storage channel of the first region S8 to the outside. The jumper fetching window is a position in which the plugging apparatus 200 fetches the standby jumper from the jumper storage apparatus. The structure of the external interface assembly may also have a plurality of forms. For example, there are a plurality of different structures of the external interface assembly in implementations described subsequently.

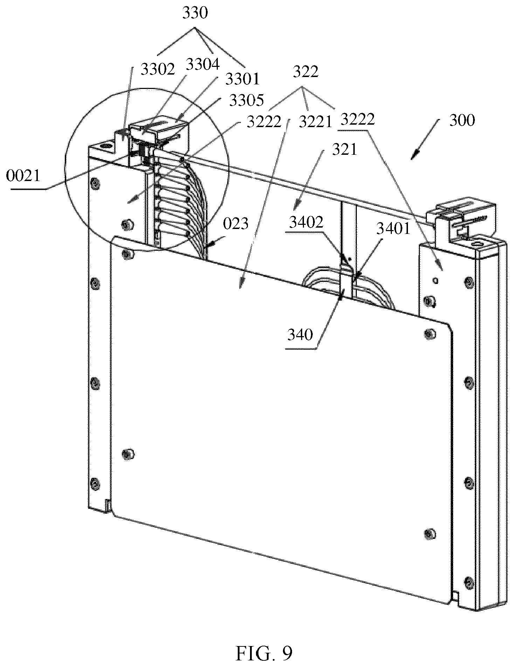

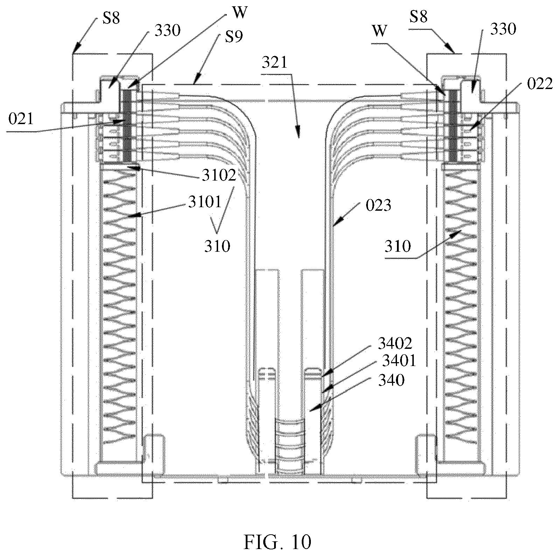

As shown in FIG. 9 and FIG. 10, in an implementation, a jumper storage apparatus 300 provided in this application includes components such as a housing 321, a cover plate 322, an external interface assembly 330, a first elastic mechanism 310, and a clamping mechanism 340. The cover plate 322 includes a first plate 3221 and two second plates 3222, where the two second plates 3222 are respectively in positions of two first regions S8, the first plate is located in a second region S9, the two second plates 3222 are connected to two ends of the housing 321, and a space jointly defined the two second plates 3222 and the housing 321 is a storage channel for storing connectors 021 and 022, and the first elastic mechanism 310. The housing 321 and the cover plate 322 form a housing assembly, and the external interface assembly 330 is located on top of the storage channel, and is also located on top of the housing assembly. The external interface assembly 330 and the storage channel are arranged in ranges of the first regions S8, and the storage channel is formed by a hollow space formed between the housing 321, the cover plate 322, and the external interface assembly 330. A cavity of the storage channel may be formed in a plurality of manners. This is not specifically limited herein.

The first elastic mechanism 310 is located in the storage channel, and abuts between the bottom of the housing assembly and connectors 021 and 022 of a standby jumper. The first elastic mechanism 310 is in an elastic compression state, to provide an abutting force acting on the connectors 021 and 022 located in the storage channel. Specifically, the first elastic mechanism 310 includes a spring 3101 and a lock block 3102, the lock block 3102 is fixedly connected to one end of the spring 3101, and the lock block 3102 is configured to carry the connectors 021 and 022. One end that is of the spring 3101 and that is far away from the lock block 3102 is fixedly connected to the bottom of the housing assembly. Specifically, the lock block 3102 directly abuts against the connectors 021 and 022 that are in the storage channel and that are closest to the first elastic mechanism 310. Since the lock block 3102 has a larger surface area than that of the spring 3101, the lock block 3102 can support the connectors 021 and 022 more easily, thereby ensuring that the connectors 021 and 022 in the storage channel are stable. A working principle of the first elastic mechanism 310 in this implementation is the same as a working principle of the first elastic mechanism in the implementation shown in FIG. 6.

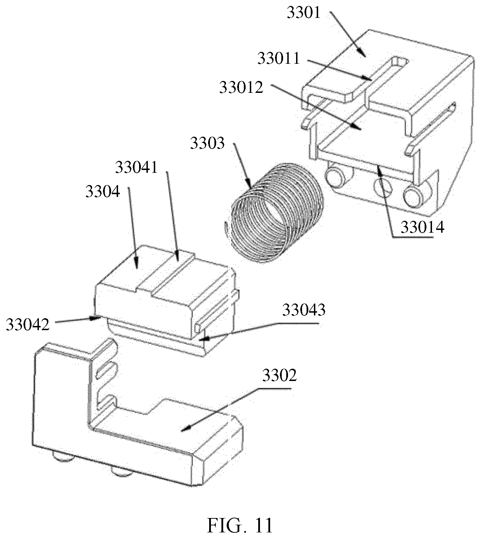

With reference to FIG. 9 and FIG. 11, the external interface assembly 330 includes a first body 3301, a second body 3302, a second elastic mechanism 3303, and a sliding block 3304. Both the first body 3301 and the second body 3302 are connected to the housing assembly. Specifically, the first body 3301 is connected to the top of the housing 321, and the second body 3302 is connected to the top of the second plate 3222 of the cover plate 322. An enclosing space 33012 is arranged in the first body 3301, the sliding block 3304 is elastically connected to the first body 3301 in the enclosing space 33012 by using the second elastic mechanism 3303, and an opening 33014 of the enclosing space 33012 faces the second body 3302. Referring to FIG. 12, the jumper fetching window W and a standby window 3305 are formed between the second body 3302 and the first body 3301, the sliding block 3304 is slidable between the jumper fetching window and inside of the enclosing space 33012 in a first direction F1, the standby window 3305 is located between the jumper fetching window W and the enclosing space in the first direction F1, the connectors are linearly arranged in the first region S8 in a second direction F2, the standby window 3305 directly faces the connectors in the storage channel of the first region S8 in the second direction F2, and the second direction F2 is perpendicular to the first direction F1.

Specifically, both the first body 3301 and the second body 3302 are arranged at one end of the housing assembly. Each of the first body 3301 and the second body 3302 is a semi-encircled structure having an internal space. One end of the second elastic mechanism 3303 is fixedly connected to the first body 3301, the other end of the second elastic mechanism 3303 is fixedly connected to the sliding block 3304, and a part of the sliding block 3304 may be accommodated in the enclosing space 33012 of the first body 3301. A notch 33011 may be arranged on one or more side surfaces of the first body 3301, and a protruding strip 33041 on the sliding block 3304 may slide on the notch 33011 under an elastic force provided by the second elastic mechanism 3303 or under an external force.

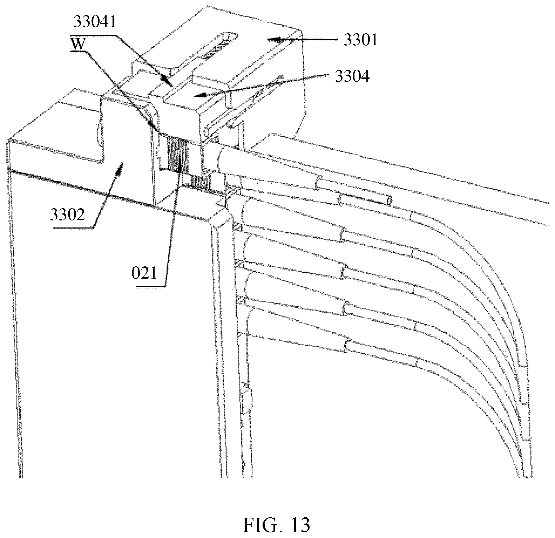

The sliding block 3304 may be in a step shape. When the sliding block 3304 is not pressed by an external force, as shown in FIG. 12 and FIG. 13, a space jointly formed by the sliding block 3304 and the second body 3302 forms the jumper fetching window W. As shown in FIG. 11, outer surfaces of the sliding block 3304 include a first surface 33042 and a second surface 33043, which are connected and may be perpendicular to each other. When the sliding block 3304 occupies a partial position in the jumper fetching window W, the first surface 33042 is in contact with the connector 021 located in the jumper fetching window W, and the second surface 33043 abuts against a connector 021 in the jumper fetching window W (specifically, the sliding block 3304 abuts against the connector by using the elastic force of the second elastic mechanism 3303). In general, in this state, the first body 3301 is in contact with the connector 021 in the jumper fetching window W.

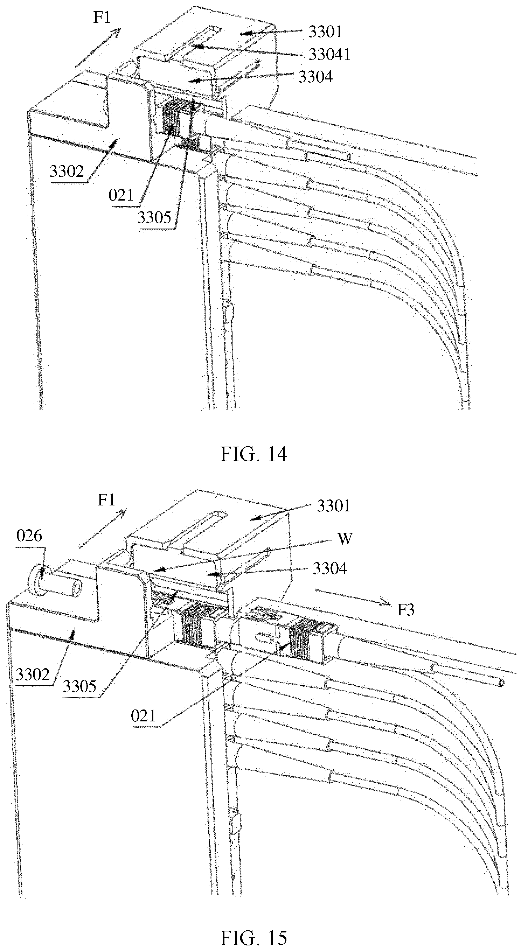

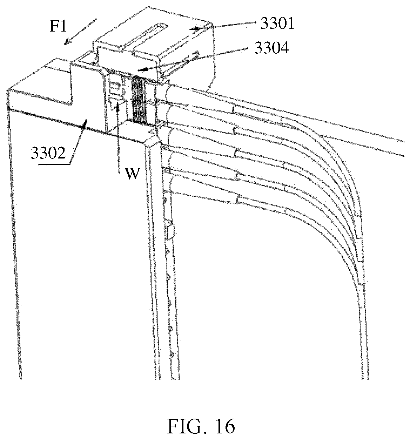

As shown in FIG. 14, when the sliding block 3304 is subject to an external force, for example, an external force from the plugging apparatus pushes the sliding block 3304 in the first direction F1, as shown in FIG. 11 and FIG. 12, the sliding block 3304 slides and compresses the second elastic mechanism 3303, and the first surface 33042 and the second surface 33043 of the sliding block 3304 leave the connector 021 located in the jumper fetching window W. In this case, the sliding block 3304 leaves the jumper fetching window W, and gives the position in the jumper fetching window W occupied by the sliding block 3304 to the clamping jaw of the plugging apparatus 200. The second elastic mechanism 3303 is compressed in a moving process of the sliding block 3304 in the jumper fetching window until the sliding block 3304 cannot continue to slide in the first direction F1 under a force. In this case, a new space is formed beside the jumper fetching window W, and is briefly referred to as a standby window 3305 herein. As shown in FIG. 14 and FIG. 15, the standby window 3305 has three side surfaces that are a first surface 33042 and a second surface 33043 that form a step shape on the sliding block 3304, and a side surface that is located on the connector in the jumper fetching window W. The standby window 3305 does not have a fourth side surface and two bottom surfaces. The standby window 3305 communicates with the storage channel of the first region S8, and the standby window 3305 may also be regarded as an extended space of the storage channel. Therefore, once the standby window 3305 is formed, a connector located in the storage channel and closest to the standby window 3305 is pushed into the standby window 3305 by the first elastic mechanism 310 in the storage channel, as shown in FIG. 16. In this way, after the connector 021 located in the jumper fetching window W is fetched by the plugging apparatus, the elastic force of the second elastic mechanism 3303 acts on the sliding block 3304, so that the sliding block 3304 pushes the connector in the standby window 3305 into the jumper fetching window W, as shown in FIG. 13. Therefore, FIG. 12, FIG. 13, FIG. 14, FIG. 15 and FIG. 16 show a process of fetching a standby jumper from a jumper storage apparatus provided in an implementation of this application.

A direction in which a connector plug in the jumper fetching window W extends may be defined as a third direction F3. As shown in FIG. 15, the third direction F3 is perpendicular to the second direction F2 and the first direction F1. Referring to FIG. 12, the second body 3302 includes a first notch 33021, the first body 3301 includes a second notch 33011, the second notch 33011 is in communication with the first notch 33021, and opening sizes of the second notch 33011 and the first notch 33021 are both less than maximum sizes of a plug of the connector 021 and a dustproof cap 026, but are both greater than a minimum size of the dustproof cap 026 exposed when the dustproof cap 026 is inserted into the plug of the connector. As shown in FIG. 15, in a process in which the plugging apparatus fetches the connector 021 at the jumper fetching window W, the connector is fetched in the third direction F3. When the connector 021 located in the jumper fetching window W is fetched by the plugging apparatus, because the opening size of the first notch 33021 is less than the maximum size of the dustproof cap 026, the dustproof cap 026 cannot pass through the first notch 33021, and the dustproof cap 026 is removed from the plug of the connector 021. Therefore, the fetched connector 021 is a connector without the dustproof cap 026 and can be directly inserted into a port of the distribution panel. In other words, a limiting structure 33022 of the second body 33032 is formed on two sides of the first notch 33021 of the second body 3302. As shown in FIG. 12, the limiting structure 33022 is configured to block the dustproof cap 026 in a process in which the plugging apparatus fetches the connector at the jumper fetching window W, so that the dustproof cap 026 is detached from the connector.

The foregoing describes two structures of the jumper fetching window W. In actual application, the jumper fetching window W may further have another transformed structure, and details are not described herein.

The clamping mechanism 340 is arranged in the second region S9, a cable organization space 3401 is formed between the clamping mechanism 340 and the housing 321, the cable of the jumper may be sequentially accommodated in the cable organization space 3401, a cable outlet 3402 is formed between the clamping mechanism 340 and the housing 321, and the cable outlet 3402 connects the cable organization space 3401 to an external space of the jumper storage apparatus. A specific structural form of the clamping mechanism 340 may be an elastic lock block. The elastic lock block is in a strip shape, and has the bottom fixed on the housing. A cable outlet 3402 is formed between the top of the elastic lock block and the housing. The cable organization space is formed between a sheet-like body located between the top and the bottom and the housing. A cable may pass through the cable organization space. If there are a plurality of cables, the cables need to pass through the cable organization space in sequence. That the cables are accommodated in the cable organization space may be understood that the cables pass through the cable organization space. In addition, a width or a diameter of the cable organization space can accommodate only one cable. In this way, it can be ensured that the cables are arranged in sequence inside the jumper storage apparatus, but cannot cross each other to cause unnecessary entangling. A plurality of clamping mechanisms 340 may be arranged as required.

As shown in FIG. 10, when the jumper storage apparatus 300 is of a structure including two first regions S8, structures of the two first regions S8 are similar. Generally, structures of the two first regions S8 are the same. Therefore, a structure of a second first region is not described again. However, it should be noted that, when the jumper storage apparatus 300 is of a structure including two first regions S8, connectors at two ends of a same standby jumper are respectively located in different first regions S8, and an arrangement sequence of the two connectors in each first region S8 is the same. In addition, the sequence of all the cable organization spaces in the second region S9 for accommodating the jumper cables is the same as the arrangement sequence of the connectors connected to the cables in the first region S8. Because the two arrangement sequences are the same, when the plugging apparatus fetches the jumpers based on the sequence, the cables and the connectors of the jumpers are fetched based on the sequence, and the cables of the jumpers do not interfere with each other. When the jumper storage apparatus 300 is of a structure including only one first region S8, the sequence of connectors at two ends of the same standby jumper in the first region S8 is adjacent. The sequence of connectors at two ends of the same standby jumper in the first region S8 is considered as a group sequence, that is, the arrangement sequence of the two connectors in the first region S8 is the same. In this way, the sequence of all the cable organization spaces in the second region S9 for accommodating the jumper cables is also the same as the arrangement sequence of the two connectors (a group) connected to the cables in the first region S8. Because the two arrangement sequences are the same, when the plugging apparatus fetches the jumpers based on the sequence, the cables and the connectors of the jumpers are fetched based on the sequence, and the cables of the jumpers do not interfere with each other.

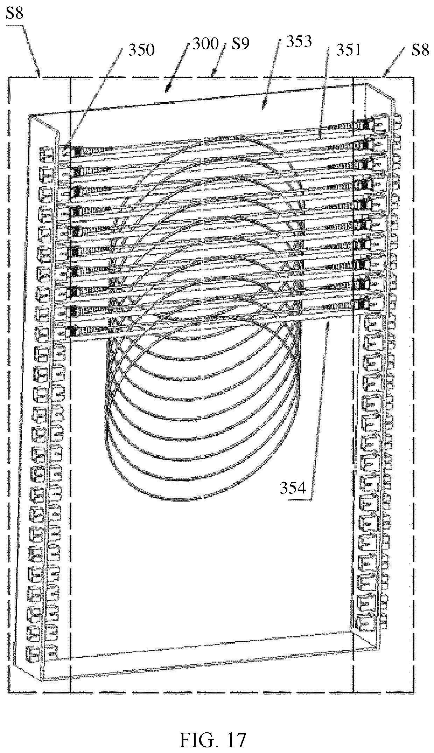

In another implementation, as shown in FIG. 17, at least one port 350 is arranged in a first region S8 of a jumper storage apparatus 300. Specifically, ports 350 in the first region S8 are arranged in a linear array and arranged in a row, and an opening of each port for inserting a connector faces a second region S9. A gap is reserved between adjacent ports 350, and the gap is used to accommodate a clamping jaw of a plugging apparatus. Each port 350 is configured to accommodate a plug of a connector of a jumper. The port 350 may be specifically an adapter, and the port 350 is a position (which may be considered as a jumper fetching window) in which the jumper is fetched by the plugging apparatus from the jumper storage apparatus 300. When there are two first regions S8, the second region S9 is located between the two first regions S8. In this implementation, a connector of a standby jumper is directly fixed on the port 350, and a cable of the standby jumper is placed in the second region S9. When necessary, the connector is fetched from the port 350 by using the plugging apparatus and taken away.

The jumper storage apparatus 300 further includes a plurality of distinguishing rods 351. A quantity of the distinguishing rods 351 may be related to a quantity of ports 350 arranged in one first region S8, for example, the two quantities are the same. The distinguishing rods 351 are at least partially located in the second region S9 and are configured to organize the cable of the jumper. Specifically, a cable of each jumper is isolated by using a distinguishing rod 351. Specifically, in an implementation, the distinguishing rod 351 is arranged only in the second region S9, that is, the distinguishing rod 351 does not extend to the first region S8. The distinguishing rod 351 is a strip-rod-shaped structure, whose two ends are fixedly connected to a housing or a bottom plate 353 of the jumper storage apparatus 300. A cable accommodation space 354 is arranged between the distinguishing rod 351 and the housing or the bottom plate 353, for a cable to pass through. In another implementation, two ends of the distinguishing rod 351 respectively extend to two first regions S8, and fixed positions of the two ends of the distinguishing rod 351 correspond to a position of a gap between adjacent ports 350. The distinguishing rod 351 may be of a straight-strip-shaped circular rod structure, and two end faces of the distinguishing rod 351 are fixedly connected to a housing or a side plate of the jumper storage apparatus 300. In another implementation, a part of the distinguishing rod 351 in the second region S9 may alternatively be in a curved shape.

For a plurality of distinguishing rods 351, the plurality of distinguishing rods 351 may be arranged in a row at equal distances. The plurality of distinguishing rods 351 may be arranged in parallel with each other.

In an implementation, the distinguishing rod 351 can further rotate. In this way, when the plugging apparatus fetches the jumper, the cable can drive the distinguishing rod 351 to rotate, thereby reducing resistance of pulling out the cable and helping the plugging apparatus fetch the jumper.

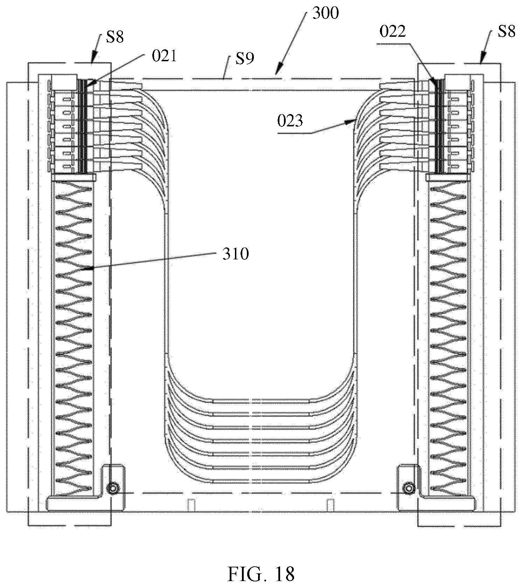

FIG. 18 and FIG. 19 are schematic diagrams of a jumper storage apparatus 300 according to another implementation of this application. This implementation also includes two first regions S8 and one second region S9. Connectors 021 and 022 are respectively located in the two first regions S8, and a cable 023 is located in the second region S9. An arrangement of a first elastic mechanism 310 is the same as that in the implementation shown in FIG. 9. A difference between this implementation and the implementation shown in FIG. 9 lies in a different structural form of an external interface assembly 330. As shown in FIG. 19, the external interface assembly 330 provided in this implementation and a housing of the jumper storage apparatus 300 are an integrated structure, and a space surrounded by the external interface assembly 330 is configured to accommodate a connector 021 in a position of a jumper fetching window W. The external interface assembly 330 includes a top plate 371, an outer side plate 372, and a baffle plate 373. The baffle plate 373 is connected between the top plate 371 and the outer side plate 372. The top plate 371 and the outer side plate 372 form an angle with each other, and may be in a perpendicular relationship. The top plate 371, the outer side plate 372, and the baffle plate 373 jointly enclose a part of the connector 021.

The external interface assembly 330 includes a third notch 3309, and the third notch 3309 is arranged on the baffle plate 373. A dustproof cap 026 and the connector 021 are respectively located on two sides of the third notch 3309. In other words, the external interface assembly 330 includes a limiting structure 3308, where the limiting structure 3308 is at least a part of the baffle plate 373, and the limiting structure 3308 is configured to block the dustproof cap 026 in a process of fetching the connector 021, so that the dustproof cap 026 is detached from the connector 021. Specifically, an opening size of the third notch 3309 is less than maximum sizes of a plug of the connector 021 and the dustproof cap 026, but is greater than a minimum size of the dustproof cap 026 exposed when the dustproof cap 026 is inserted into the plug of the connector. When the connector 021 located in the jumper fetching window W is fetched by the plugging apparatus, because the opening size of the third notch 3309 is less than the maximum size of the dustproof cap 026, the dustproof cap 026 cannot pass through the third notch 3309 due to existence of the limiting structure 3308, and the dustproof cap 026 is removed from the plug of the connector 021.

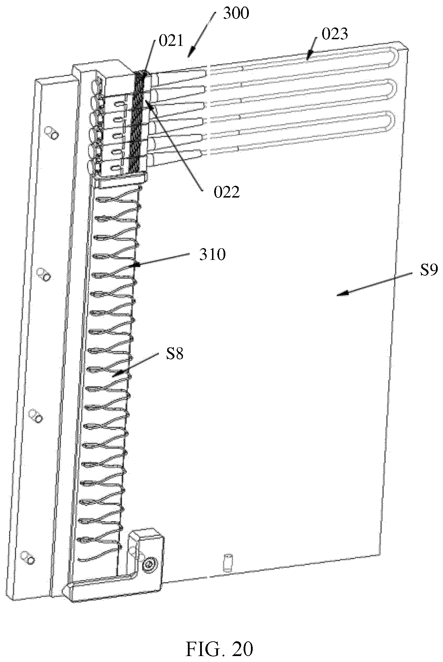

FIG. 20 is a schematic diagram of a jumper storage apparatus 300 according to another implementation of this application. In this implementation, the jumper storage apparatus 300 includes one first region S8 and one second region S9. Two connectors 021 and 022 of a same standby jumper are arranged in the first region S8 adjacently. A cable 023 is arranged in a U shape in the second region S9. An arrangement of a first elastic mechanism 310 is the same as that in the implementation shown in FIG. 9. An external interface assembly 330 of the jumper storage apparatus 300 provided in this implementation has a same structure as that of the external interface assembly 330 of the implementation shown in FIG. 18.

For the jumper storage apparatuses in the foregoing different implementations, this application further provides an optical fiber scheduling method, including:
determining, based on a requirement, a to-be-connected service port, that is, determining a target port into which a connection optical jumper is inserted, where the target port includes a first port on a first distribution panel and a second port on a second distribution panel;
controlling a plugging apparatus, to enable a robotic arm of the plugging apparatus to move to a position of a jumper fetching window of a jumper storage apparatus;
controlling the robotic arm of the plugging apparatus to fetch an optical fiber connector of a standby jumper from the position of the jumper fetching window;
controlling the plugging apparatus to transport the fetched optical fiber connector of the standby jumper to a position of the first port on the first distribution panel. and inserting the optical fiber connector into the first port, where in this case, another optical fiber connector of the standby jumper is still in another jumper fetching window of the jumper storage apparatus;
controlling the plugging apparatus, to enable the robotic arm of the plugging apparatus to move to a position of the another jumper fetching window of the jumper storage apparatus;
controlling the robotic arm of the plugging apparatus to fetch the another optical fiber connector of the standby jumper from the position of the jumper fetching window, where in this case, the standby jumper completely leaves the jumper storage apparatus; and
controlling the plugging apparatus to transport the fetched optical fiber connector of the standby jumper to a position of the second port on the second distribution panel, and inserting the optical fiber connector into the second port, where in this case, a fiber distribution process is completed, and the standby jumper in the jumper storage apparatus becomes the connection optical jumper connected between the first port and the second port.

In another implementation, the jumper storage apparatus may have only one jumper fetching window, and the plugging apparatus successively fetches two optical fiber connectors of a same standby jumper from the jumper fetching window.

The jumper storage apparatus may be fixed on a consumable AODF for a mechanical arm to use. A fixing manner is not limited herein, for example, a mounting hole, a thread and a nut, or a pin. After jumpers stored in the jumper storage apparatus are used up, the jumper storage apparatus may implement reuse by detaching and remounting jumpers, thereby improving utilization of the jumper storage apparatus.

## Claims

1. A jumper storage apparatus (300), wherein the jumper storage apparatus (300) is applied to an optical distribution device, the jumper storage apparatus (300) is configured to store a jumper (302), the jumper (302) comprises a cable (023) and two connectors (021, 022) connected to two ends of the cable (023), the cable (023) is an optical fiber, the connectors (021, 022) are optical fiber connectors, and the jumper storage apparatus (300) comprises a first region (S8) and a second region (S9), wherein
the second region (S9) and the first region (S8) are adjacent to each other and have internal spaces in communication with each other, the connectors (021, 022) of the jumper (302) are located in the first region (S8), the cable (023) of the jumper (302) is located in the second region (S9), a jumper fetching window (W) and a first elastic mechanism (310) are arranged in the first region (S8), the jumper fetching window (W) is configured to accommodate one of the connectors (021, 022), and the jumper fetching window (W) is a position in which a plugging apparatus fetches the jumper (302) from the jumper storage apparatus (300); and the first elastic mechanism (310) is located between all the connectors (021, 022) in the first region (S8) and a bottom surface of a housing (321) of the jumper storage apparatus (300), and elastically abuts between the housing (321) of the jumper storage apparatus (300) and the connectors (021, 022);
wherein the jumper storage apparatus (300) comprises the housing (321), a cover plate (322), and an external interface assembly (330), the housing (321) and the cover plate (322) are in snap-fit with each other and form the first region (S8) and the second region (S9), and the external interface assembly (330) is connected between the housing (321) and the cover plate (322) and forms the jumper fetching window (W);
**characterized in that**
the external interface assembly (330) comprises a first body (3301), a second body (3302), a second elastic mechanism (3303), and a sliding block (3304), both the first body (3301) and the second body (3302) are connected to the housing (321), an enclosing space (33012) is arranged in the first body (3301), the sliding block (3304) is elastically connected to the first body (3301) in the enclosing space (33012) by using the second elastic mechanism (3303), an opening (33014) of the enclosing space (33012) faces the second body (3302), the jumper fetching window (W) and a standby window (3305) are formed between the second body (3302) and the first body (3301), the sliding block (3304) is slidable between the jumper fetching window (W) and inside of the enclosing space (33012) in a first direction (F1), the standby window (3305) is located between the jumper fetching window (W) and the enclosing space (33012) in the first direction (F1), the connectors (021, 022) are linearly arranged in the first region (S8) in a second direction (F2), the standby window (3305) directly faces the connectors (021, 022) in the first region (S8) in the second direction (F2), and the second direction (F2) is perpendicular to the first direction (F1);
wherein the second body (3302) further comprises a limiting structure (33022), and the limiting structure (33022) is configured to prevent a dustproof cap (026) from being fetched in a process in which the plugging apparatus fetches a connector (021) at the jumper fetching window (W); or
the external interface assembly (330) and the housing (321) are an integrated structure, wherein the external interface assembly (330) comprises a limiting structure (3308), and the limiting structure (3308) is configured to prevent a dustproof cap (026) from being fetched in a process in which the plugging apparatus fetches a connector (021) at the jumper fetching window (W).

2. The jumper storage apparatus (300) according to claim 1, wherein there is one first region (S8), there is one jumper fetching window (W), and two connectors (021, 022) of a same jumper (302) are arranged adjacently in the first region (S8).

3. The jumper storage apparatus (300) according to claim 1, wherein there are two first regions (S8), each of the first regions (S8) has one jumper fetching window (W), the second region (S9) is located between the two first regions (S8), and two connectors (021, 022) of a same jumper (302) are respectively located in different first regions (S8).

4. The jumper storage apparatus (300) according to claim 3, wherein there are a plurality of jumpers (302), and two connectors (021, 022) of a same jumper (302) are arranged in a same sequence in each of the first regions (S8).

5. The jumper storage apparatus (300) according to any one of claims 1 to 4, wherein the first elastic mechanism (310) comprises a spring (3101) and a lock block (3102), one end of the spring (3101) is fastened to the housing (321) of the jumper storage apparatus (300), the other end of the spring (3101) is fastened to the lock block (3102), and when the first region (S8) stores at least one connector (0,21, 022), the lock block (3102) abuts against a connector (021, 022) closest to the first elastic mechanism (310).

6. The jumper storage apparatus (300) according to any one of claims 1 to 5, wherein when the first region (S8) stores no connector (021, 022), two ends of the first elastic mechanism (310) abut between the housing (321) of the jumper storage apparatus (300) and the external interface assembly (330) or are in a natural state.

7. The jumper storage apparatus (300) according to any one of claims 1 to 6, wherein the second region (S9) comprises a clamping mechanism (340), a cable organization space (3401) is formed between the clamping mechanism (340) and the housing (321), the cable (023) of the jumper (302) is sequentially accommodated in the cable organization space (3401), a cable outlet (3402) is formed between the clamping mechanism (340) and the housing (321), and the cable outlet (3402) connects the cable organization space (3401) to an external space of the jumper storage apparatus (300); and a sequence of a cable (023) of a jumper (302) in the cable organization space (3401) is the same as a sequence of connectors (021, 022) of a same jumper (032) in the first region (S8).

## Patentansprüche

1. Überbrückungsdrahtlagervorrichtung (300), wobei die Überbrückungsdrahtlagervorrichtung (300) auf eine optische Verteilungseinrichtung angewendet wird, die Überbrückungsdrahtlagervorrichtung (300) dazu konfiguriert ist, einen Überbrückungsdraht (302) zu lagern, der Überbrückungsdraht (302) ein Kabel (023) und zwei Anschlüsse (021, 022) umfasst, die an zwei Enden des Kabels (023) angeschlossen sind, das Kabel (023) eine optische Faser ist, die Anschlüsse (021, 022) optische Faseranschlüsse sind und die Überbrückungsdrahtlagervorrichtung (300) einen ersten Bereich (S8) und einen zweiten Bereich (S9) umfasst, wobei
der zweite Bereich (S9) und der erste Bereich (S8) nebeneinander liegen und Innenräume aufweisen, die in Kommunikation miteinander stehen, sich die Anschlüsse (021, 022) des Überbrückungsdrahts (302) in dem ersten Bereich (S8) befinden, sich das Kabel (023) des Überbrückungsdrahts (302) in dem zweiten Bereich (S9) befindet, ein Überbrückungsdrahterfassungsfenster (W) und ein erster elastischer Mechanismus (310) in dem ersten Bereich (S8) angeordnet sind, das Überbrückungsdrahterfassungsfenster (W) dazu konfiguriert ist, einen der Anschlüsse (021, 022) aufzunehmen, und das Überbrückungsdrahterfassungsfenster (W) eine Position ist, in der eine Steckvorrichtung den Überbrückungsdraht (302) aus der Überbrückungsdrahtlagervorrichtung (300) erfasst; und sich der erste elastische Mechanismus (310) zwischen allen Anschlüssen (021, 022) in dem ersten Bereich (S8) und einer Bodenfläche eines Gehäuses (321) der Überbrückungsdrahtlagervorrichtung (300) befindet und elastisch zwischen dem Gehäuse (321) der Überbrückungsdrahtlagervorrichtung (300) und den Anschlüssen (021, 022) anliegt;
wobei die Überbrückungsdrahtlagervorrichtung (300) das Gehäuse (321), eine Abdeckplatte (322) und eine externe Schnittstellenbaugruppe (330) umfasst, das Gehäuse (321) und die Abdeckplatte (322) in Schnappverbindung miteinander stehen und den ersten Bereich (S8) und den zweiten Bereich (S9) bilden und die externe Schnittstellenbaugruppe (330) zwischen dem Gehäuse (321) und der Abdeckplatte (322) angeschlossen ist und das Überbrückungsdrahterfassungsfenster (W) bildet;
**dadurch gekennzeichnet, dass**
die externe Schnittstellenanordnung (330) einen ersten Körper (3301), einen zweiten Körper (3302), einen zweiten elastischen Mechanismus (3303) und einen Schiebeblock (3304) umfasst, wobei sowohl der erste Körper (3301) als auch der zweite Körper (3302) an das Gehäuse (321) angeschlossen sind, ein umschließender Raum (33012) in dem ersten Körper (3301) angeordnet ist, der Schiebeblock (3304) unter Verwendung des zweiten elastischen Mechanismus (3303) elastisch an den ersten Körper (3301) in dem umschließenden Raum (33012) angeschlossen ist, eine Öffnung (33014) des umschließenden Raums (33012) dem zweiten Körper (3302) zugewandt ist, das Überbrückungsdrahterfassungsfenster (W) und ein Standby-Fenster (3305) zwischen dem zweiten Körper (3302) und dem ersten Körper (3301) gebildet sind, der Schiebeblock (3304) zwischen dem Überbrückungsdrahterfassungsfenster (W) und einem Inneren des umschließenden Raums (33012) in einer ersten Richtung (F1) schiebbar ist, sich das Standby-Fenster (3305) zwischen dem Überbrückungsdrahterfassungsfenster (W) und dem umschließenden Raum (33012) in der ersten Richtung (F1) befindet, die Anschlüsse (021, 022) in der ersten Region (S8) in einer zweiten Richtung (F2) linear angeordnet sind, das Standby-Fenster (3305) den Anschlüssen (021, 022) in der ersten Region (S8) in der zweiten Richtung (F2) direkt zugewandt ist und die zweite Richtung (F2) senkrecht zu der ersten Richtung (F1) ist; wobei der zweite Körper (3302) ferner eine Begrenzungsstruktur (33022) umfasst und die Begrenzungsstruktur (33022) dazu konfiguriert ist, zu verhindern, dass eine staubdichte Kappe (026) in einem Prozess erfasst wird, in dem die Steckvorrichtung einen Anschluss (021) an dem Überbrückungsdrahterfassungsfenster (W) erfasst; oder
die externe Schnittstellenbaugruppe (330) und das Gehäuse (321) eine integrierte Struktur sind, wobei die externe Schnittstellenbaugruppe (330) eine Begrenzungsstruktur (3308) umfasst und die Begrenzungsstruktur (3308) dazu konfiguriert ist, zu verhindern, dass eine staubdichte Kappe (026) in einem Prozess erfasst wird, in dem die Steckvorrichtung einen Anschluss (021) an dem Überbrückungsdrahterfassungsfenster (W) erfasst.

2. Überbrückungsdrahtlagervorrichtung (300) nach Anspruch 1, wobei ein erster Bereich (S8) vorhanden ist, ein Überbrückungsdrahterfassungsfenster (W) vorhanden ist und zwei Anschlüsse (021, 022) eines gleichen Überbrückungsdrahts (302) nebeneinander in dem ersten Bereich (S8) angeordnet sind.

3. Überbrückungsdrahtlagervorrichtung (300) nach Anspruch 1, wobei zwei erste Bereiche (S8) vorhanden sind, jeder der ersten Bereiche (S8) ein Überbrückungsdrahterfassungsfenster (W) aufweist, sich der zweite Bereich (S9) zwischen den beiden ersten Bereichen (S8) befindet und sich zwei Anschlüsse (021, 022) eines gleichen Überbrückungsdrahts (302) jeweils in unterschiedlichen ersten Bereichen (S8) befinden.

4. Überbrückungsdrahtlagervorrichtung (300) nach Anspruch 3, wobei eine Vielzahl von Überbrückungsdrähten (302) vorhanden ist und zwei Anschlüsse (021, 022) eines gleichen Überbrückungsdrahts (302) in jedem der ersten Bereiche (S8) in einer gleichen Reihenfolge angeordnet sind.

5. Überbrückungsdrahtlagervorrichtung (300) nach einem der Ansprüche 1 bis 4, wobei der erste elastische Mechanismus (310) eine Feder (3101) und einen Verriegelungsblock (3102) umfasst, ein Ende der Feder (3101) an dem Gehäuse (321) der Überbrückungsdrahtlagervorrichtung (300) befestigt ist, das andere Ende der Feder (3101) an dem Verriegelungsblock (3102) befestigt ist, und wenn der erste Bereich (S8) mindestens einen Anschluss (021, 022) lagert, der Verriegelungsblock (3102) an einem Anschlüsse (021, 022) anliegt, der dem ersten elastischen Mechanismus (310) am nächsten ist.

6. Überbrückungsdrahtlagervorrichtung (300) nach einem der Ansprüche 1 bis 5, wobei, wenn der erste Bereich (S8) keinen Anschluss (021, 022) lagert, zwei Enden des ersten elastischen Mechanismus (310) zwischen dem Gehäuse (321) der Überbrückungsdrahtlagervorrichtung (300) und der externen Schnittstellenanordnung (330) anliegen oder sich in einem natürlichen Zustand befinden.

7. Überbrückungsdrahtlagervorrichtung (300) nach einem der Ansprüche 1 bis 6, wobei der zweite Bereich (S9) einen Klemmmechanismus (340) umfasst, ein Kabelorganisationsraum (3401) zwischen dem Klemmmechanismus (340) und dem Gehäuse (321) gebildet ist, das Kabel (023) des Überbrückungsdrahts (302) nacheinander in den Kabelorganisationsraum (3401) aufgenommen wird, ein Kabelauslass (3402) zischen dem Klemmmechanismus (340) und dem Gehäuse (321) gebildet ist und der Kabelauslass (3402) den Kabelorganisationsraum (3401) an einen externen Raum der Überbrückungsdrahtlagervorrichtung (300) anschließt; und eine Sequenz eines Kabels (023) eines Überbrückungsdrahts (302) in dem Kabelorganisationsraum (3401) die gleiche wie eine Sequenz von Anschlüssen (021, 022) eines gleichen Überbrückungsdrahts (032) in dem ersten Bereich (S8) ist.

## Revendications

1. Appareil de stockage de cavalier (300), dans lequel l'appareil de stockage de cavalier (300) est appliqué à un dispositif de distribution optique, l'appareil de stockage de cavalier (300) est configuré pour stocker un cavalier (302), le cavalier (302) comprend un câble (023) et deux connecteurs (021, 022) connectés à deux extrémités du câble (023), le câble (023) est une fibre optique, les connecteurs (021, 022) sont des connecteurs de fibre optique, et l'appareil de stockage de cavalier (300) comprend une première zone (S8) et une seconde zone (S9), dans lequel
la seconde zone (S9) et la première zone (S8) sont adjacentes l'une à l'autre et ont des espaces internes en communication l'une avec l'autre, les connecteurs (021, 022) du cavalier (302) sont situés dans la première zone (S8), le câble (023) du cavalier (302) est situé dans la seconde zone (S9), une fenêtre de récupération de cavalier (W) et un premier mécanisme élastique (310) sont disposés dans la première zone (S8), la fenêtre de récupération de cavalier (W) est configurée pour loger l'un des connecteurs (021, 022), et la fenêtre de récupération de cavalier (W) est une position dans laquelle un appareil de branchement récupère le cavalier (302) à partir de l'appareil de stockage de cavalier (300) ; et le premier mécanisme élastique (310) est situé entre tous les connecteurs (021, 022) dans la première zone (S8) et une surface inférieure d'un boîtier (321) de l'appareil de stockage de cavalier (300), et vient en butée élastiquement entre le boîtier (321) de l'appareil de stockage de cavalier (300) et les connecteurs (021, 022) ;
dans lequel l'appareil de stockage de cavalier (300) comprend le boîtier (321), une plaque de recouvrement (322), et un ensemble interface externe (330), le boîtier (321) et la plaque de recouvrement (322) sont encliquetés l'un avec l'autre et forment la première zone (S8) et la seconde zone (S9), et l'ensemble interface externe (330) est connecté entre le boîtier (321) et la plaque de recouvrement (322) et forme la fenêtre de récupération de cavalier (W) ;
caractérisé en ce
l'ensemble interface externe (330) comprend un premier corps (3301), un second corps (3302), un second mécanisme élastique (3303), et un bloc coulissant (3304), le premier corps (3301) et le second corps (3302) sont tous deux connectés au boîtier (321), un espace de confinement (33012) est disposé dans le premier corps (3301), le bloc coulissant (3304) est connecté élastiquement au premier corps (3301) dans l'espace de confinement (33012) en utilisant le second mécanisme élastique (3303), une ouverture (33014) de l'espace de confinement (33012) fait face au second corps (3302), la fenêtre de récupération de cavalier (W) et une fenêtre de veille (3305) sont formées entre le second corps (3302) et le premier corps (3301), le bloc coulissant (3304) peut coulisser entre la fenêtre de récupération de cavalier (W) et à l'intérieur de l'espace de confinement (33012) dans une première direction (F1), la fenêtre de veille (3305) est située entre la fenêtre de récupération de cavalier (W) et l'espace de confinement (33012) dans la première direction (F1), les connecteurs (021, 022) sont disposés linéairement dans la première zone (S8) dans une seconde direction (F2), la fenêtre de veille (3305) fait directement face aux connecteurs (021, 022) dans la première zone (S8) dans la seconde direction (F2), et la seconde direction (F2) est perpendiculaire à la première direction (F1) ; dans lequel le second corps (3302) comprend également une structure de limitation (33022), et la structure de limitation (33022) est configurée pour empêcher qu'un capuchon anti-poussière (026) soit récupéré dans un processus dans lequel l'appareil de branchement récupère un connecteur (021) au niveau de la fenêtre de récupération de cavalier (W) ; ou
l'ensemble interface externe (330) et le boîtier (321) sont une structure intégrée, dans lequel l'ensemble interface externe (330) comprend une structure de limitation (3308), et la structure de limitation (3308) est configurée pour empêcher qu'un capuchon anti-poussière (026) soit récupéré dans un processus dans lequel l'appareil de branchement récupère un connecteur (021) au niveau de la fenêtre de récupération de cavalier (W).

2. Appareil de stockage de cavalier (300) selon la revendication 1, dans lequel il existe une première zone (S8), il existe une fenêtre de récupération de cavalier (W), et deux connecteurs (021, 022) d'un même cavalier (302) sont disposés de manière adjacente dans la première zone (S8).

3. Appareil de stockage de cavalier (300) selon la revendication 1, dans lequel il existe deux premières zones (S8), chacune des premières zones (S8) a une fenêtre de récupération de cavalier (W), la seconde zone (S9) est située entre les deux premières zones (S8), et deux connecteurs (021, 022) d'un même cavalier (302) sont respectivement situés dans différentes premières zones (S8).

4. Appareil de stockage de cavalier (300) selon la revendication 3, dans lequel il existe une pluralité de cavaliers (302), et deux connecteurs (021, 022) d'un même cavalier (302) sont disposés dans une même séquence dans chacune des premières zones (S8).

5. Appareil de stockage de cavalier (300) selon l'une quelconque des revendications 1 à 4, dans lequel le premier mécanisme élastique (310) comprend un ressort (3101) et un bloc de verrouillage (3102), une extrémité du ressort (3101) est attachée au boîtier (321) de l'appareil de stockage de cavalier (300), l'autre extrémité du ressort (3101) est attachée au bloc de verrouillage (3102), et lorsque la première zone (S8) stocke au moins un connecteur (0,21, 022), le bloc de verrouillage (3102) vient en butée contre un connecteur (021, 022) le plus proche du premier mécanisme élastique (310).

6. Appareil de stockage de cavalier (300) selon l'une quelconque des revendications 1 à 5, dans lequel lorsque la première zone (S8) ne stocke aucun connecteur (021, 022), deux extrémités du premier mécanisme élastique (310) viennent en butée entre le boîtier (321) de l'appareil de stockage de cavalier (300) et l'ensemble interface externe (330) ou sont dans un état naturel.

7. Appareil de stockage de cavalier (300) selon l'une quelconque des revendications 1 à 6, dans lequel la seconde zone (S9) comprend un mécanisme de serrage (340), un espace d'organisation de câbles (3401) est formé entre le mécanisme de serrage (340) et le boîtier (321), le câble (023) du cavalier (302) est logé séquentiellement dans l'espace d'organisation de câbles (3401), une sortie de câble (3402) est formée entre le mécanisme de serrage (340) et le boîtier (321), et la sortie de câble (3402) connecte l'espace d'organisation de câbles (3401) à un espace externe de l'appareil de stockage de cavalier (300) ; et une séquence d'un câble (023) d'un cavalier (302) dans l'espace d'organisation de câbles (3401) est la même qu'une séquence de connecteurs (021, 022) d'un même cavalier (032) dans la première zone (S8).
